# EUROPEAN PATENT SPECIFICATION

(11) **EP 2 313 709 B1**
(45) Date of publication and mention of the grant of the patent: **25.03.2020**
(21) Application number: 08874426.3
(22) Date of filing: 19.11.2008
(51) Int. Cl.: F25B 1/10, F25B 1/00, F24F 11/00, F25B 49/02, F24F 11/83

(54) **CHILLER WITH SETPOINT ADJUSTMENT**
KÜHLVORRICHTUNG MIT SOLLWERTEINSTELLUNG
REFROIDISSEUR AVEC RÉGLAGE DU POINT DE CONSIGNE

(30) Priority: 21.05.2008 US 128399 P
(43) Date of publication of application: 27.04.2011
(73) Proprietor: Modine Manufacturing Company, Racine, Wisconsin 53403-2552 (US)
(72) Inventor: BOOTH, Richard, Devon EX15 1QB (GB); HITCHCOX, Duncan, E., Yorkshire (GB)
(74) Representative: Williams, Michael David
(86) International application number: PCT/US2008/083991
(87) International publication number: WO 2009/142658

(56) References cited:
- EP-A2- 1 398 576
- JP-A- 2005 249 384
- US-A- 4 951 475
- US-A- 5 079 929
- US-A- 5 255 529
- US-A- 5 531 076
- US-A- 5 531 076
- US-A1- 2003 074 908
- US-A1- 2004 065 099

## Description

### FIELD OF THE INVENTION

The present invention relates to chillers for generating a supply of cool liquid. More specifically, the present invention relates to a method and apparatus for operating an air-cooled chiller at increased efficiency under varying conditions.

Document US 5,255,529 A discloses an environmental control system comprising a refrigeration loop including a variable speed compressor having an inlet and an outlet, a condenser having an inlet connected with the compressor outlet and an outlet, an evaporator having an inlet connected with the condenser outlet and an outlet connected with the compressor inlet, a variable speed evaporator fan, an evaporator fan control for controlling the speed of the evaporator fan and a monitor for monitoring a superheat condition of the refrigerant at the compressor inlet. The evaporator fan control controls the speed of the evaporator fan as a function on the value of the superheat condition. A variable speed condenser fan is controlled by a condenser fan speed control that functions in part on the value of the superheat condition.

Document US 4,951,475 A describes a method and an apparatus for controlling the capacity of a multi-stage cooling system which utilizes a plurality of commonly piped compressors having common suction load wherein at least one compressor being a variable speed compressor, means for establishing a single predetermined cooling stage cut-in pressure and a single predetermined cooling stage cut-out pressure, a plurality of condenser fans and microprocessor based control means for controlling the operation of the system.

Document US 5,531,076 A discloses a compressor discharge pressure control for a unitary outdoor fan, a multi-split air conditioning system having multiple compressors, multiple evaporator coils, multiple condenser coils and a single outdoor fan. Pressure comparison circuitry compares the discharge pressures of the compressors to predetermined pressure levels to generate a plurality of pressure state signals. On/off monitoring circuitry monitors the on/off states of the compressors to generate a plurality of compressor state signals.

Control circuitry controls the fan in accordance with both sets of signals under a predetermined priority scheme.

JP 2005 249384 A discloses a reversible compression cycle using temperature sensors to adjust the rotational speed of the compressor and the fans associated with the heat exchangers of the cycle for optimum system performance. It is an object underlying the present invention to provide chiller systems and a method of controlling chiller systems which allow an easy and reliable control of the operation conditions.

### SUMMARY

The object underlying the present invention is achieved by chiller systems according to independent claim 1 and by a method of controlling chiller systems according to independent claim 11. Preferred embodiments are defined in the respective dependent claims.

In some embodiments, the invention provides a chiller system for generating a flow of cooled fluid such as water, the chiller system including a plurality of compressors having inlets and outlets, at least one condenser having an inlet and an outlet, the condenser inlet being in fluid communication with the compressor outlets, a fan for pushing ambient air across the condenser, an expansion valve having an inlet and an outlet, the inlet being in fluid communication with the condenser outlet, an evaporator having an inlet and an outlet, the inlet being in fluid communication with the expansion valve outlet and the outlet being in fluid communication with the compressor inlets, and a load balancing valve having an inlet and an outlet, the inlet being in fluid communication with the compressor outlets and the outlet being in fluid communication with the expansion valve outlet. The load balancing valve can shunt excess pressure from the compressor outlets to the expansion valve outlet to reduce the ratio of the compressor outlet pressure to the compressor inlet pressure. The chiller system further includes a control system that adjusts a Head Pressure Control setpoint of the condenser depending upon the ambient temperature and the load on the chiller system. The control system can adjust the Head Pressure Control setpoint to reduce a compressor input power draw and a fan input power draw for a given load and ambient temperature under which the chiller system operates.

In some embodiments, the invention provides a method of operating an air-cooled chiller system in which a Head Pressure Control setpoint of the condenser of the chiller system is dynamically adjusted according to a pre-determined algorithm to maintain the Head Pressure Control setpoint at a level corresponding to the lowest combined compressor power input and fan power input for the load on the chiller system and the ambient temperature at the condenser. The pre-determined algorithm can be generated by determining the Head Pressure Control setpoint corresponding to the lowest combined compressor input power and fan input power for a particular chiller system load and ambient temperature, wherein individual Head Pressure Control setpoints are determined over a wide range of chiller system load and ambient temperature combinations.

Other aspects of the invention will become apparent by consideration of the detailed description and accompanying drawings.

### BRIEF DESCRIPTION OF THE DRAWINGS

Fig. 1 is a perspective view of a chiller system according to some embodiments of of the present invention.
Fig. 2 is a fluid circuit diagram of the chiller system of Fig. 1.
Fig. 3a is a side view of a portion of the chiller system of Fig. 1.
Fig. 3b is a top view of the chiller system of Fig. 3a.
Fig. 3c is a front end view of the chiller system of Fig. 3a.
Fig. 3d is a rear end view of the chiller system of Fig. 3a.
Fig. 4 is a graph that illustrates operation of a chiller system including a start-up sequence according to an embodiment of the invention.
Fig. 5 is a graph that illustrates operation of a chiller system including an alternate start-up sequence according to an embodiment of the invention.
Fig. 6 graphically illustrates optimized Head Pressure Control setpoint settings over a range of chiller system loads and ambient temperatures.
Fig. 7 graphically illustrates the chiller system input power draws as a function of HPC setpoint for a given load and ambient temperature.
Fig. 8 illustrates tables of test data illustrating the difference in Energy Efficiency Ratio with adjustable Head Pressure Control setpoints and without.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

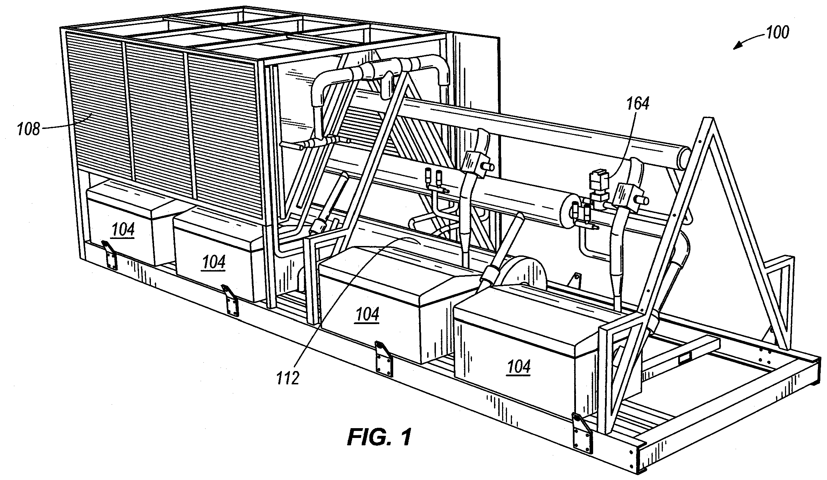

Figs. 1-3d illustrate a chiller system 100 for generating a flow of a cooled fluid, such as water, according to some embodiments of the invention. The chiller system 100 includes a plurality of compressors 104, one or more condensers 108, and an evaporator 112 that together form a closed circuit for circulation of a refrigerant therethrough. The chiller system 100 of the illustrated embodiment of Figs. 1-3d is a single circuit system, meaning that refrigerant passes through the compressors 104 once with each circuit through the chiller system 100.

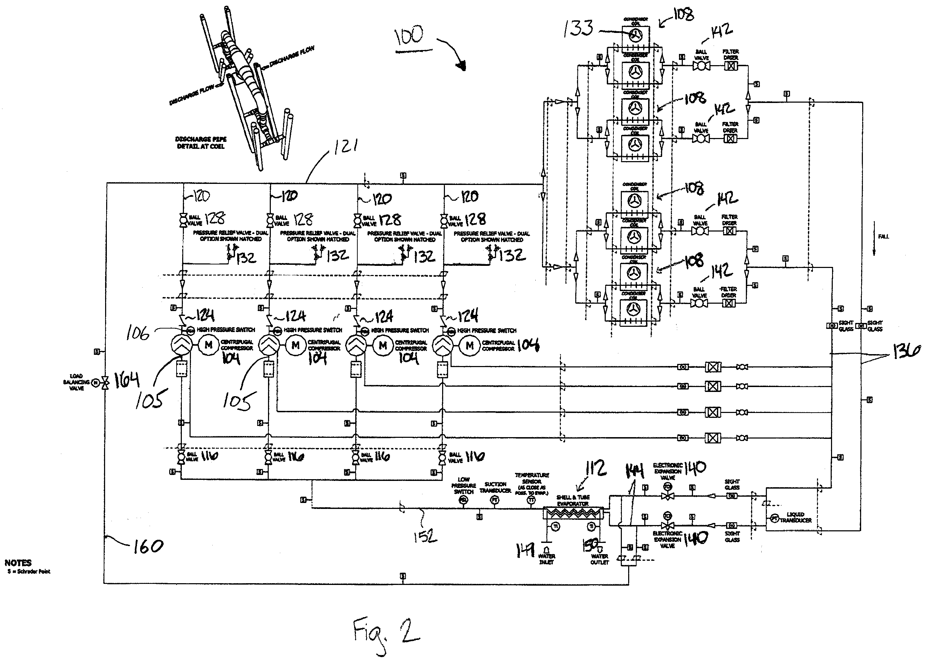

The compressors 104 are centrifugal-type compressors that each run on magnetic bearings. Referring now to Fig. 2, ball valves 116 are provided at the inlet 105 of each compressor 104 to control the flow of refrigerant into the associated compressor 104. That is, one, two or more of the compressors 104 can be operated simultaneously to increase or decrease the operating capacity of the chiller system 100. The unused compressors 104 can remain inactive until activated to increase the operating capacity of the chiller system 100.

One or more lines 120 fluidly communicate between the outlet, or hot gas side, of each compressor 104 with an inlet of the condensers 108. In the illustrated embodiment, the hot gas lines 120 between each compressor 104 and the condensers 108 are connected in parallel such that the flow of hot gaseous refrigerant from the compressors 104 is evenly distributed among the condensers 108 for condensing. The various pipes operate as a manifold 121 that collects the output from a number of compressors 104 and then distributes that output to the various condensers 108. It should be noted that the number of compressors 104 employed in the system is not related to the number of condensers 108. Thus, the number of compressors 104 employed could equal the number of condensers 108 or could be different as desired.

A check valve 124 is provided in the hot gas line 120 between each compressor 104 and the condensers 108 to permit hot gas to flow from the compressors 104 to the condensers 108 and to inhibit backflow from the condensers 108 to the compressors 104. A ball valve 128 is provided in each hot gas line 120 between each check valve 124 and the condensers 108 to establish a minimum pressure necessary for hot gas to flow from the compressors 104 to the condensers 108. In addition, a pressure relief valve 132 can be provided in the hot gas line 120 between each check valve 124 and each ball valve 128 to inhibit operation of the system above a maximum pressure between the compressor 104 and the condensers 108.

The condensers 108 are air-cooled, meaning that ambient air around the condensers 108 receives thermal energy from the hot gaseous refrigerant flowing through the condensers 108. The condensers 108 can be located remotely from the compressors 104 and other components of the chiller system 100. For example, the condensers 108 can be located outdoors, for example, on a roof of a building, while the remainder of the chiller system 100 can be located within the building. In other embodiments, however, such as the embodiment depicted in Fig. 1, the chiller system 100 is assembled as an integrated package for installation in a single location (e.g., outdoors).

Condenser fans 133 are provided to force ambient air across the condenser 108 to facilitate transfer of heat from the refrigerant within the condenser 108 to the ambient air, thus cooling the refrigerant for condensation. The amount of heat transfer depends upon the volume of air blowing across the condensers 108, which is based on the speed of the condenser fans, and the temperature of the ambient air. The fans can be powered by variable speed motors, such as electronically commutated AC motors so as to have variable speeds for increasing and decreasing the flow rate of the ambient air across the condensers 108 as needed.

As shown in Fig. 2, a plurality of lines 136 can fluidly communicate between the outlets of the condensers 108 and the inlets of one or more electronic expansion valves 140. Again, the lines 136 are connected in parallel such that the flow of condensed refrigerant from the condensers 108 is evenly distributed among the expansion valves 140 for expansion. Ball valves 142 are provided in the lines 136 to establish a minimum pressure necessary for refrigerant to flow to the expansion valves 140. The piping between the condenser outlets and the expansion valves 140 function as a manifold that collects the condensed fluid from the condensers 108 and evenly distributes the fluid to the expansion valves 140.

The electronic expansion valves 140 accept the condensed liquid refrigerant from the condensers 108 and expand the liquid refrigerant into a vapor. In the illustrated embodiment, a plurality of expansion lines 144 fluidly communicate between the outlet(s) of the expansion valves 140 and the inlet of the evaporator 112.

As shown in Fig. 2, the evaporator 112 can be a shell and tube-type evaporator. In other embodiments, the chiller 100 can include one or more evaporators having shell and tube-type constructions, or alternatively, having other constructions, such as, for example, tube and tube-type, plate-type, and the like. Refrigerant vapor and/or vapor-liquid discharged at the electronic expansion valves 140 passes through the evaporator 112. As the vapor and/or vapor-liquid travels through the evaporator 112, any liquid evaporates and the vapor is superheated. A line 152 fluidly communicates between the outlet of the evaporator 112 and the inlets of the compressors 104. This completes the closed circuit that the refrigerant travels through the chiller system 100.

The evaporator 112 includes a conduit containing a flow of cooled fluid. Cooled fluid flows into an inlet 149 of the conduit, through the conduit in the evaporator 112, and out through an outlet 150. As the refrigerant vapor evaporates within the evaporator, thermal energy is transferred from the cooled fluid through the evaporator 112 to the refrigerant to provide the energy needed to vaporize any refrigerant liquid and to superheat the refrigerant vapor. As energy is transferred from the cooled fluid to the refrigerant, the temperature of the cooled fluid 102 decreases, cooling the cooled fluid. The cooled fluid can be conducted from the outlet 150 elsewhere as needed.

The chiller system 100 can be operated with a single compressor 104 acting on the refrigerant, or can be operated with two or more compressors 104 acting on the refrigerant to increase the cooling capacity of the chiller system 100. Second and subsequent compressors 104 can be initiated for operation while the first compressor 104 is running to provide additional capacity as needed.

A compression ratio is calculated based on the measured refrigerant pressure at the compressor outlet 106 and the measured refrigerant pressure at the compressor inlet 105. During normal operation, the compression ratio can vary, depending on the ambient conditions, the demand on the chiller system 100, and the compressor speed. The compression ratio can vary from about 1.5 to about 5.5. However, to initiate start-up of a second compressor 104 while the chiller system 100 is running, a start-up compression ratio must be satisfied. The start-up compression ratio is typically less than the actual compression ratio. If the actual compression ratio exceeds the start-up compression ratio, the compressor can stall. Compressor stall is an aerodynamic condition that occurs when the pressure ratio across a dynamic compressor exceeds a stall limit. During stall, the compressor is unable to compress fluid as the fluid does not flow through the compressor or in some conditions flows in a reverse direction. This means that although the second compressor 104 is running, refrigerant is not being pushed across the compressor 104, reducing the efficiency of the chiller system 100.

In order to effect changes to the actual compression ratio C during operation of the chiller system 100 in anticipation of a compressor start-up, a bypass line 160 is connected between the hot gas lines 120 at the compressor outlet O and the expansion lines 144 between the expansion valve 140 and the evaporator 112. A load balancing valve 164 is provided in the bypass line 160 to control a supply of gaseous refrigerant from the hot gas line 120 to the expansion lines 144. When the load balancing valve 164 is closed, no gaseous refrigerant flows through the bypass line 160. When the load balancing valve 164 is opened, however, pressurized gas from the hot gas line 120 is shunted to the expansion lines 144. In some embodiments, the load balancing valve 164 can be an electronically modulating valve.

Opening the bypass valve 164 decreases the compressor outlet pressure Po. As the compressor outlet pressure Po is reduced, the compression ratio C is also reduced. Opening the bypass valve 164 can also slightly increase the inlet pressure Pi of the evaporated refrigerant at the compressor inlet, further reducing the compression ratio C.

Thus, in order to increase capacity of the running chiller system 100, a start-up sequence is initiated in which it is first determined if the actual compression ratio C across the compressors 104 is less than or equal to a desired start-up compression ratio Cs. If the actual compression ratio C is greater than the start-up compression ratio Cs, then the bypass valve 164 is slowly opened (partially or fully) to shunt pressurized refrigerant from the hot gas line 120 to the expansion line 140. The bypass valve 164 is opened slowly so as to avoid rapid pressure changes within the chiller system 100. For example, the bypass valve 164 can be opened approximately 1% per minute over a period of several minutes.

As the bypass valve 164 is opened, the compression ratio is monitored. When the compression ratio has reduced to a point equal to or less than the start-up compression ratio, the second compressor 104 is started. The desired start-up compression depends upon the specific arrangement of the compressors 104 and the chiller system 100, and the specific arrangement of the compressors 104 themselves. Exemplary start-up compression ratios can be from about 2.0 to about 3.0. In one embodiment, the start-up compression ratio is approximately 2.4.

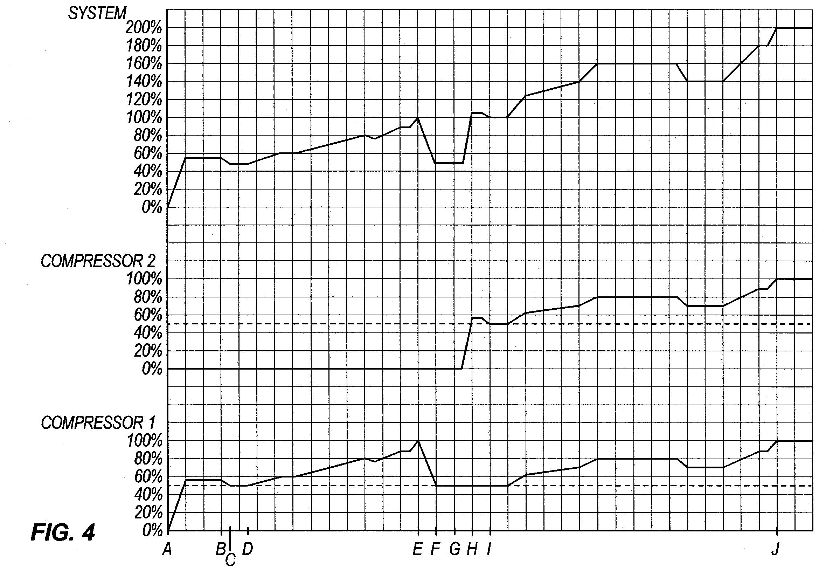

Fig. 4 is a chart that illustrates the output of two compressors and the total output of a two compressor system during the start-up sequence of a two-compressor chiller system 100 according to an embodiment of the invention. In this embodiment, in which the start-up compression ratio is 2.4, the first compressor 104 initiated for operation of the chiller system 100 is the compressor having the lowest number of operation hours to date. Before operating the first compressor 104, the system is operating at time A, at which the total system output is zero. This first compressor 104 is started, and is allowed to run loads up to approximately 53% of its maximum output, as shown at time B. The term "load" describes the amount of heat to be removed from the cooled fluid in the chiller. Once a minimum speed, for example, 29,000 rpm, is achieved at the first compressor, the load on the first compressor 104 is reduced to approximately 50% of the maximum output, as illustrated at time C. Once the first compressor 104 has stabilized at approximately 50% for a delay period of, for example, 60 seconds, the load on the first compressor 104 can be adjusted to match the load required by the chiller system 100, as illustrated from time D to time E.

If the demand on the chiller system 100 meets or exceeds the maximum output of the first compressor 104 (such as is illustrated at time E), a start-up sequence for a second compressor 104 will initiate in which the load on the first compressor 104 is reduced to approximately 50% of its maximum output and the load balancing valve 164 is opened if the compression ratio exceeds the start-up compression ratio, as shown at point F. The first compressor 104 continues operation at approximately 50% of its maximum output until the compression ratio C is equal to or less than the desired start-up compression ratio Cs of 2.4, as illustrated between time F and G. When the actual compression ratio C is equal to or less than the start-up compression ratio Cs, a second compressor 104 is started with a load of approximately 53% of its maximum output, as shown at time H. Once a minimum speed of 29,000 rpm is achieved, the load on the second compressor 104 and the first compressor 104 is reduced or maintained at approximately 50%, as illustrated at time I. After a minimum delay of, for example, 60 seconds, the load on both compressors 104 is adjusted together to satisfy the demand on the chiller system 100, as illustrated between time I and J. In constructions with more than two compressors, the steps from time E to J repeat to initiate the start-up of the third, fourth, fifth, etc. compressors. It should be noted that the illustrated construction shows each of the compressors operating at the same output when they are started. Thus, if 180% of system output is required, each compressor operates at 90%. Other systems may operate differently. For example, one compressor could be maintained at 100% while the second compressor varies its output to match the total system demand.

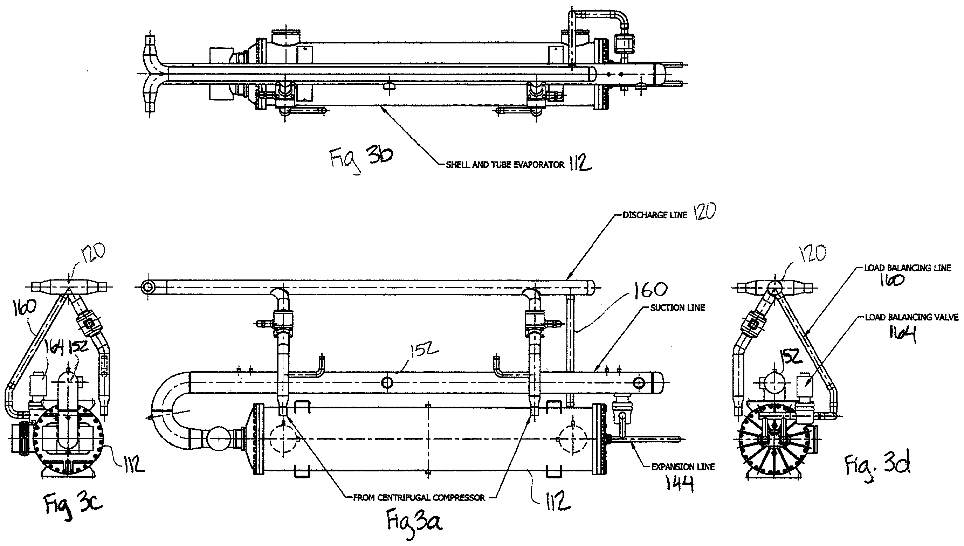

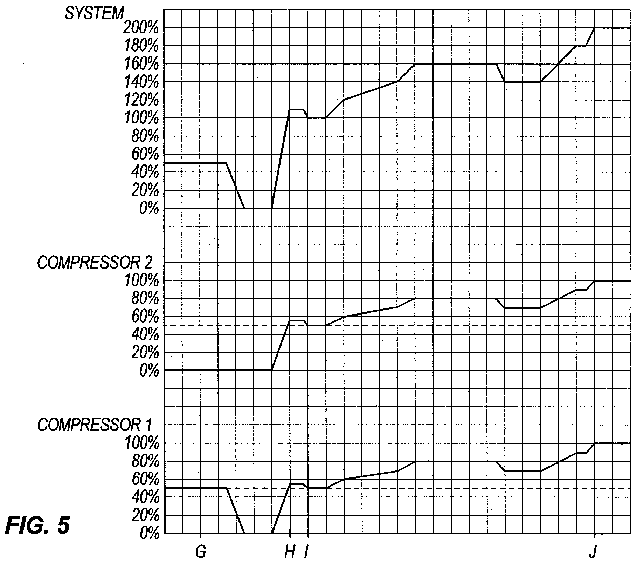

Fig. 5 graphically illustrates an alternate start-up sequence for a multi-compressor chiller system 100. The alternate sequence can be used in conjunction with the sequence shown and described with respect to Fig. 4. When a first compressor 104 is in operation and the second compressor 104 is waiting to start (as illustrated at time A), the load balancing valve 164 is opened to achieve the desired compression ratio. These steps can be carried out as described with respect to Fig. 3. If, however, after a maximum delay of, for example, 100 seconds, the desired compression ratio is not achieved, then operation of both compressors 104 is halted as illustrated at time B. When both compressors 104 have completed halting procedures and/or delays, both compressors 104 are started together at loads of approximately 53% of their maximum output as illustrated at time C. Once a minimum operating speed has been achieved, the load is reduced to 50% for both compressors 104 for a delay period as shown at point D. After the delay period, the load for both compressors 104 is adjusted together to meet the demand on the chiller system 100, as illustrated after time D.

The sequence of Fig. 5 provides a synchronized start-up when a running start-up of a second compressor cannot be carried out.

Various alternatives to the certain features and elements of the present invention are described with reference to specific embodiments of the present invention. With the exception of features, elements, and manners of operation that are mutually exclusive of or are inconsistent with each embodiment described above, it should be noted that the alternative features, elements, and manners of operation described with reference to one particular embodiment are applicable to the other embodiments.

For example, while reference is made herein to ball valves 116, 128, check valves 124, and balancing valve 164, in other embodiments other valves, including, but not limited to, any suitable one or multiple-way valves, such as a check valve, ball valve, umbrella valve, duck-bill valve, and the like, can also or alternatively be used to control fluid flow through the various elements of the chiller system 100 or a portion of the chiller system 100.

As discussed, at least the condenser 108 is usually located outside and is therefore subjected to widely varying ambient temperatures. When the chiller system 100 operates during cold weather, the ambient temperatures may drop sufficiently low to materially reduce the condensing temperature of the refrigerant in the condenser 108. This produces a corresponding reduction in head or inlet pressure at the condenser 108, resulting in a decreased pressure differential across the expansion valve 140. Because of the reduced pressure difference across the expansion valve 140, the flow rate decreases and less refrigerant flows from the condenser 108 to the evaporator 112. As a consequence, the evaporator 112 does not receive sufficient refrigerant flow to accept heat from the cooled fluid such that the demand on the chiller system 100 is not met.

Typical control systems hold the condenser head pressure reasonably constant under varying ambient temperatures. For example, the condenser pressure can be held at a fixed level, or control point, by keying the speed of the condenser fan to the condensing temperature, which is known as the head pressure control (HPC) setpoint, and thus to the condenser head pressure. As the condenser head pressure tends to deviate from the desired level, the fan speed varies accordingly. For example, as the condenser head pressure tends to decrease in response to a falling outside ambient temperature, the fan speed can be automatically reduced. The volume of air blown across the condenser 108 therefore decreases and this limits the amount of heat that can be extracted from the refrigerant as it flows through the condenser 108, insuring that the refrigerant pressure remains relatively close to the desired level. By holding the pressure at the condenser inlet at the control point, the pressure difference across the expansion valve 140 will be sufficient to properly feed the evaporator 112 and satisfy the demand on the chiller system 100.

Unfortunately, the prior control systems are capable of controlling at only a single condenser pressure and are therefore set at the HPC setpoint temperature required to maintain adequate refrigerant flow to the evaporator 108 at, for example, full capacity. At reduced capacity operation, wherein the refrigerant flow rate is purposely reduced when the load on the chiller system 100 drops, the previously developed control systems will maintain the HPC setpoint temperature at the same level for both full and reduced capacity. During reduced capacity operation, the condenser head pressure will therefore be substantially above that which is needed to adequately feed the evaporator 112. This higher-than-necessary head pressure results in unnecessary and wasteful power consumption.

The present invention, on the other hand, dynamically adjusts the HPC setpoint temperature higher or lower as the load on the chiller system 100 and the ambient temperature conditions change. This results in optimum operation at all outdoor air temperatures and at varying loads, thereby maximizing the efficiency and minimizing the power requirements and operating costs of the chiller system 100.

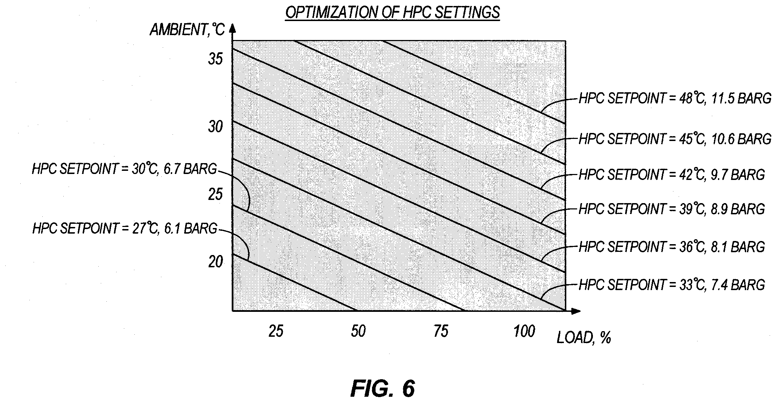

Fig. 6 illustrates a range of optimum HPC setpoints for given load requirements and ambient temperatures. As the ambient temperature changes and/or the load changes, the HPC setpoint is adjusted to maintain increased efficiency of the chiller system 100. For example, at a 75% load and an ambient temperature of 20 C, the HPC setpoint is set to approximately 30 C. However, as the ambient temperature increases to 25 C while at a constant load of 75%, the HPC setpoint is adjusted upwardly to 33 C. Conversely, if the load on the chiller system 100 decreases from 75% to 50% while at a constant ambient temperature of 20 C, the HPC setpoint is adjusted downwardly to approximately 27 C.

The diagonal lines representing discrete HPC setpoint levels on Fig. 6 are merely exemplary and are not intended to indicate that the HPC setpoint jumps from one level to the next upon changes in load and/or ambient temperature. Rather, as indicated by the shading in the background of the graph, the changes in HPC setpoint temperature can be minute and gradual, and can fall between adjacent diagonal lines.

The optimum HPC setpoint for a given load and ambient temperature is selected by determining the lowest total input power or power draw of the chiller system 100 for a range of loads and ambient temperatures. The chiller system 100 has two primary power draws, the power drawn by the compressors 104 and the power drawn by the condenser fans. The centrifugal compressors 104 and the condenser fans both provide fully modulating speed control. Furthermore, the compressors 104 and the fans have a unique power-draw or input characteristics in that the output/input relationship obeys the power law that a change in power output is inversely proportional to the cubed change in power input.

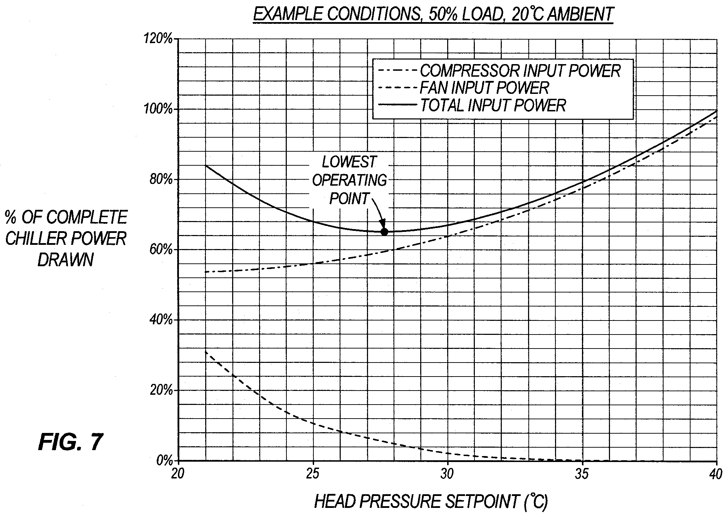

Fig. 7 illustrates the compressor input power, the fan input power, and the total input power, which is taken to be the sum of the compressor input power and the fan input power. As illustrated, the compressor input power and the fan input power both obey the "cube law" of energy reduction as previously discussed. The compressor, fan and total input powers are illustrated for a given load, in this case, 50% load, and for a given ambient temperature, in this case 20 C. As is shown, the lowest total input power occurs at an HPC setpoint of approximately 27.5 C. Thus, when the chiller system 100 is being operated at 50% load in an ambient temperature of 20 C, the HPC setpoint should be set to 27.5 C to minimize the total input power of the chiller system 100.

By determining the HPC setpoint corresponding to the lowest total input power over a wide range of chiller system loads and ambient temperatures, as is depicted in Fig. 7, the desired HPC setpoint for a particular load and ambient temperature can be determined as depicted in Fig. 6.

The chiller system 100 can include an onboard microprocessor or other controller that uses the results of extensive HPC setpoint test procedures, as illustrated in Fig. 7, and a performance prediction software program to determine the optimum HPC setpoint for any given set of chiller system 100 operating conditions to deliver the highest Energy Efficiency Ratio (EER) available and thus to keep the chiller power drawn to a minimum without compromising the demand on the chiller system 100. The chiller system 100 can include sensors for determining the ambient air temperature, the condensing pressure, the temperature difference of the fluid at the evaporator 112, and the number of compressors 104 in operation, and their combined capacity. The output of these sensors can be used to determine whether a change in HPC setpoint is desired, and what the new HPC setpoint should be. In some embodiments, the optimum HPC setpoint can be determined based on data from a look-up table which is formulated from test and design data. In some embodiments, the HPC setpoint can be adjusted when the operating efficiency of the chiller system 100 drops below a benchmark. In some embodiments, the benchmark can be about 0.1 below the optimised value.

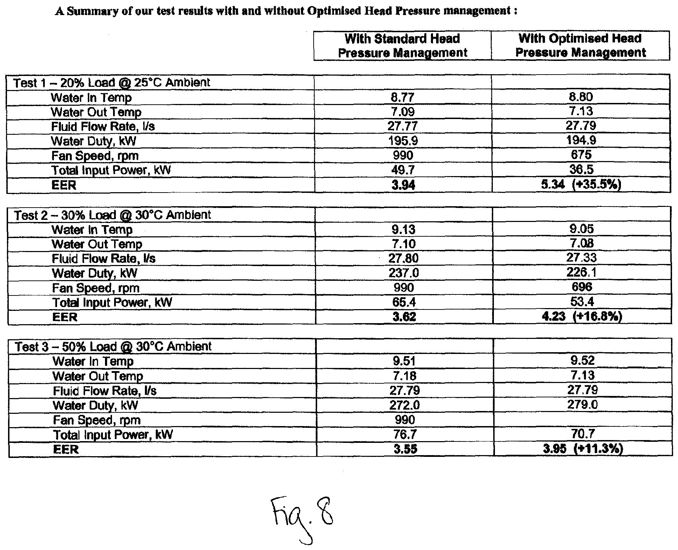

Fig. 8 illustrates the results of several tests of the performance of the chiller system 100 in which adjustable HPC setpoint is employed versus performance of the chiller system 100 in which a constant HPC setpoint is employed. As is illustrated in Tests 1, 2 and 3, at varying load and ambient temperatures, the total input power is reduced while the EER is increased with adjustable HPC setpoint according to the present invention.

## Claims

1. A chiller system (100), comprising:
a compressor (104) operable at a compressor speed between a first speed and a second speed to deliver a flow of compressed fluid to a manifold (121) at a compressor pressure;
a condenser (108) in fluid communication with the manifold (121) to receive the compressed fluid;
a condenser fan (133) operable at a fan speed between a minimum fan speed and a maximum fan speed to direct a cooling flow to the condenser (108) to cool the compressed fluid, wherein the compressor (104) and the condenser fan (133) both provide fully modulating speed control;
an evaporator (112) positioned to receive the flow of compressed fluid and operable to cool a second fluid;
the chiller system being **characterised in that** it also comprises a controller operated at least partially in response to a measured temperature of the second fluid and a measured temperature of the cooling flow to determine a desired compressor pressure and to vary the compressor speed and the fan speed such that the compressor pressure equals the desired pressure thus to keep the chiller system power draw to a minimum.

2. The chiller system (100) of claim 1,
further comprising a first sensor positioned to measure a property of the compressed fluid at the manifold (121).

3. The chiller system (100) of claim 2,
wherein the property is a pressure of the compressed fluid at the manifold (121).

4. The chiller system (100) of claim 3,
further comprising a second sensor positioned to measure the temperature of the cooling flow.

5. The chiller system (100) of claim 4,
further comprising a third sensor positioned to measure the temperature of the second fluid at a second fluid outlet (150).

6. The chiller system (100) of claim 5,
wherein the cooling flow is the ambient air flow, the evaporator discharges the second fluid from an outlet and the controller is in communication with the first sensor, the second sensor and the third sensor.

7. The chiller system (100) of claim 1 or 6,
wherein the compressor (104) is a first of a plurality of compressors (104), each selectively operable at the compressor speed.

8. The chiller system (100) of claim 7,
wherein each of the compressors (104) includes a centrifugal compressor.

9. The chiller system (100) of claim 1 or 6,
wherein the condenser (108) includes a plurality of heat exchangers each arranged to receive a portion of the compressed fluid and to discharge the cooled compressed fluid to a condenser manifold.

10. The chiller system (100) of claim 9,
wherein the condenser fan (133) is one of a plurality of fans (133), and wherein at least one fan (133) is associated with each of the heat exchangers.

11. A method of controlling a chiller system (100), the method comprising:
operating a compressor (104) at a compressor speed to discharge a compressed fluid at a compressor pressure;
directing the compressed fluid through a condenser (108);
operating a condenser fan (133) at a fan speed to direct a cooling fluid toward the condenser (1 08) to cool the compressed fluid in the condenser (108); whereby the compressor (104) and the condenser fan (133) both provide fully modulating speed control;
passing the compressed fluid through an expansion device to produce a flow of cool fluid;
passing the flow of cool fluid adjacent a second fluid to cool the second fluid;
the method being **characterised in that** it further comprises measuring a temperature of the second fluid and a temperature of the cooling fluid;
calculating a desired compressor pressure at least partially in response to the measured temperature of the second fluid and the measured temperature of the cooling fluid;
varying the fan speed and the compressor speed so that the compressor pressure matches the desired compressor pressure thus to keep the chiller system power draw to a minimum.

12. The method of claim 11,
further comprising selectively operating each of a plurality of compressors (104) at the compressor speed to discharge compressed fluid at the compressor pressure.

13. The method of claim 11,
further comprising dividing the compressed fluid into a plurality of paths, each path directing compressed fluid to one of a plurality of heat exchangers that cooperate to at least partially define the condenser.

## Patentansprüche

1. Kälteanlage (100), die Folgendes umfasst:
einen Verdichter (104), der mit einer Verdichtergeschwindigkeit zwischen einer ersten Geschwindigkeit und einer zweiten Geschwindigkeit betrieben werden kann, um einen Strom von verdichtetem Fluid an einen Verteiler (121) mit einem Verdichterdruck abzugeben,
einen Kondensator (108) in Fluidverbindung mit dem Verteiler (121), um das verdichtete Fluid aufzunehmen,
ein Kondensatorgebläse (133), das mit einer Gebläsegeschwindigkeit zwischen einer minimalen Gebläsegeschwindigkeit und einer maximalen Gebläsegeschwindigkeit betrieben werden kann, um einen Kühlstrom zu dem Kondensator (108) zu leiten, um das verdichtete Fluid zu kühlen, wobei der Verdichter (104) und das Kondensatorgebläse (133) beide eine voll modulierende Geschwindigkeitsregelung bereitstellen,
einen Verdampfer (112), der angeordnet ist, um den Strom von verdichtetem Fluid aufzunehmen, und betrieben werden kann, um ein zweites Fluid zu kühlen,
wobei die Kälteanlage **dadurch gekennzeichnet ist, dass** sie ebenfalls Folgendes umfasst:
einen Regler, der wenigstens teilweise in Reaktion auf eine gemessene Temperatur des zweiten Fluids und eine gemessene Temperatur des Kühlstroms betrieben wird, um einen gewünschten Verdichterdruck zu bestimmen und um die Verdichtergeschwindigkeit und die Gebläsegeschwindigkeit derart zu verändern, dass der Verdichterdruck dem gewünschten Druck gleicht, um so die Kälteanlagen-Leistungsaufnahme bei einem Minimum zu halten.

2. Kälteanlage (100) nach Anspruch 1,
die ferner einen ersten Sensor umfasst, der angeordnet ist, um eine Eigenschaft des verdichteten Fluids an dem Verteiler (121) zu messen.

3. Kälteanlage (100) nach Anspruch 2,
wobei die Eigenschaft ein Druck des verdichteten Fluids an dem Verteiler (121) ist.

4. Kälteanlage (100) nach Anspruch 3,
die ferner einen zweiten Sensor umfasst, der angeordnet ist, um die Temperatur des Kühlstroms zu messen.

5. Kälteanlage (100) nach Anspruch 4,
die ferner einen dritten Sensor umfasst, der angeordnet ist, um die Temperatur des zweiten Fluids an einem zweiten Fluidauslass (150) zu messen.

6. Kälteanlage (100) nach Anspruch 5,
wobei der Kühlstrom der Umgebungsluftstrom ist, der Verdampfer das zweite Fluid aus einem Auslass abgibt und der Regler in Kommunikation mit dem ersten Sensor, dem zweiten Sensor und dem dritten Sensor steht.

7. Kälteanlage (100) nach Anspruch 1 oder 6,
wobei der Verdichter (104) ein erster von mehreren Verdichtern (104) ist, deren jeder selektiv mit der Verdichtergeschwindigkeit betrieben werden kann.

8. Kälteanlage (100) nach Anspruch 7,
wobei jeder der Verdichter (104) einen Zentrifugalverdichter einschließt.

9. Kälteanlage (100) nach Anspruch 1 oder 6,
wobei der Kondensator (108) mehrere Wärmetauscher einschließt, die jeweils dafür angeordnet sind, einen Anteil des verdichteten Fluids aufzunehmen und das gekühlte verdichtete Fluid an einen Kondensatorverteiler abzugeben.

10. Kälteanlage (100) nach Anspruch 9,
wobei das Kondensatorgebläse (133) eines von mehreren Gebläsen (133) ist und wobei wenigstens ein Gebläse (133) mit jedem der Wärmetauscher verknüpft ist.

11. Verfahren zum Steuern einer Kälteanlage (100), wobei das Verfahren Folgendes umfasst:
Betreiben eines Verdichters (104) mit einer Verdichtergeschwindigkeit, um ein verdichtetes Fluid mit einem Verdichterdruck abzugeben,
Leiten des verdichteten Fluids durch einen Kondensator (108),
Betreiben eines Kondensatorgebläses (133) mit einer Gebläsegeschwindigkeit, um einen Kühlstrom zu dem Kondensator (108) hin zu leiten, um das verdichtete Fluid in dem Kondensator (108) zu kühlen, wobei der Verdichter (104) und das Kondensatorgebläse (133) beide eine voll modulierende Geschwindigkeitsregelung bereitstellen,
Führen des verdichteten Fluids durch eine Expansionseinrichtung, um einen Strom von kühlem Fluid zu erzeugen,
Führen des Stroms von kühlem Fluid angrenzend an ein zweites Fluid, um das zweite Fluid zu kühlen,
wobei das Verfahren **dadurch gekennzeichnet ist, dass** es ferner Folgendes umfasst:
Messen einer Temperatur des zweiten Fluids und einer Temperatur des Kühlfluids,
Berechnen eines gewünschten Verdichterdrucks wenigstens teilweise in Reaktion auf die gemessene Temperatur des zweiten Fluids und die gemessene Temperatur des Kühlstroms,
Verändern der Gebläsegeschwindigkeit und der Verdichtergeschwindigkeit so, dass der Verdichterdruck dem gewünschten Druck entspricht, um so die Kälteanlagen-Leistungsaufnahme bei einem Minimum zu halten.

12. Verfahren nach Anspruch 11,
das ferner das selektive Betreiben jedes von mehreren Verdichtern (104) mit der Verdichtergeschwindigkeit umfasst, um verdichtetes Fluid mit dem Verdichterdruck abzugeben.

13. Verfahren nach Anspruch 11,
das ferner das Teilen des verdichteten Fluids in mehrere Wege umfasst, wobei jeder Weg verdichtetes Fluid zu einem von mehreren Wärmetauschern leitet, die zusammenwirken, um wenigstens teilweise den Kondensator zu definieren.

## Revendications

1. Système de refroidissement (100), comprenant :
un compresseur (104) pouvant être actionné à une vitesse de compresseur entre une première vitesse et une deuxième vitesse pour transférer un flux de fluide comprimé vers un collecteur (121) à une pression du compresseur ;
un condenseur (108) en communication de fluide avec le collecteur (121) pour recevoir le fluide comprimé ;
un ventilateur de condenseur (133) pouvant être actionné à une vitesse de ventilateur entre une vitesse de ventilateur minimale et une vitesse de ventilateur maximale pour diriger un flux de refroidissement vers le condenseur (108) afin de refroidir le fluide comprimé, dans lequel le compresseur (104) et le ventilateur du condenseur (133) assurent tous les deux un contrôle de vitesse entièrement modulant ;
un évaporateur (112) positionné de sorte à recevoir le flux de fluide comprimé et servant à refroidir un deuxième fluide ;
le système de refroidissement étant **caractérisé en ce qu'**il comprend en outre :
un moyen de commande actionné au moins en partie en réponse à une température mesurée du deuxième fluide et à une température mesurée du flux de refroidissement pour déterminer une pression de compresseur voulue et pour varier la vitesse du compresseur et la vitesse du ventilateur, de sorte que la pression du compresseur est égale à la pression voulue, afin de réduire ainsi au minimum la puissance absorbée par le système de refroidissement.

2. Système de refroidissement (100) selon la revendication 1,
comprenant en outre un premier capteur configuré pour mesurer une propriété du fluide comprimé au niveau du collecteur (121).

3. Système de refroidissement (100) selon la revendication 2,
dans lequel la propriété est une pression du fluide comprimé au niveau du collecteur (121).

4. Système de refroidissement (100) selon la revendication 3,
comprenant en outre un deuxième capteur configuré pour mesurer la température du flux de refroidissement.

5. Système de refroidissement (100) selon la revendication 4,
comprenant en outre un troisième capteur configuré pour mesurer la température du deuxième fluide au niveau d'une deuxième sortie du fluide (150).

6. Système de refroidissement (100) selon la revendication 5,
dans lequel le flux de refroidissement est constitué par l'écoulement d'air ambiant, l'évaporateur déchargeant le deuxième fluide à partir d'une sortie et le moyen de commande étant en communication avec le premier capteur, le deuxième capteur et le troisième capteur.

7. Système de refroidissement (100) selon les revendications 1 ou 6,
dans lequel le compresseur (104) est un premier compresseur de plusieurs compresseurs (104), chacun pouvant être actionné sélectivement à la vitesse du compresseur.

8. Système de refroidissement (100) selon la revendication 7,
dans lequel chacun des compresseurs (104) inclut un compresseur centrifuge.

9. Système de refroidissement (100) selon les revendications 1 ou 6,
dans lequel le condenseur (108) inclut plusieurs échangeurs de chaleur, chacun étant configuré pour recevoir une partie du fluide comprimé et pour décharger le fluide comprimé vers un collecteur du condenseur.

10. Système de refroidissement (100) selon la revendication 9,
dans lequel le ventilateur du condenseur (133) est l'un de plusieurs ventilateurs (133), et dans lequel au moins un ventilateur (133) est associé à chacun des échangeurs de chaleur.

11. Procédé de commande d'un système de refroidissement (100), le procédé comprenant les étapes ci-dessous :
actionnement d'un compresseur (104) à une vitesse du compresseur pour décharger un fluide comprimé à une pression du compresseur ;
direction du fluide comprimé à travers un condenseur (108) ;
actionnement d'un ventilateur du condenseur (133) à une vitesse de ventilateur pour diriger un fluide de refroidissement vers le condenseur (108) afin de refroidir le fluide comprimé dans le condenseur (108) ; le compresseur (104) et le ventilateur du condenseur (133) assurant ainsi tous les deux un contrôle de la vitesse entièrement modulant ;
passage du fluide comprimé à travers un dispositif d'expansion pour produire un flux de fluide de refroidissement ;
passage du flux du fluide de refroidissement près d'un deuxième fluide pour refroidir le deuxième fluide ;
le procédé étant **caractérisé en ce qu'**il comprend en outre les étapes ci-dessous :
mesure d'une température du deuxième fluide et d'une température du fluide de refroidissement ;
calcul d'une pression voulue du compresseur, au moins en partie en réponse à la température mesurée du deuxième fluide et à la température mesurée du fluide de refroidissement ;
variation de la vitesse du ventilateur et de la vitesse du compresseur, de sorte que la pression du compresseur est adaptée à la pression voulue du compresseur afin de réduire ainsi au minium le tirage de puissance du système de refroidissement.

12. Procédé selon la revendication 11,
comprenant en outre l'étape d'actionnement sélectif de chacun de plusieurs compresseurs (104) à la vitesse du compresseur pour décharger le fluide comprimé à la pression du compresseur.

13. Procédé selon la revendication 11,
comprenant en outre l'étape de division du fluide comprimé en plusieurs trajets, chaque trajet dirigeant le fluide comprimé vers l'un de plusieurs échangeurs de chaleur qui coopèrent pour définir au moins partiellement le condenseur.
